# FASCICULE DE BREVET EUROPEEN

(11) **EP 1 395 197 B1**
(45) Date de publication et mention de la délivrance du brevet: **02.11.2006**
(21) Numéro de dépôt: 02724081.1
(22) Date de dépôt: 15.05.2002
(51) Int. Cl.: A61C 17/20, B06B 1/02

(54) **INSTRUMENT DE FAçONNAGE PAR ULTRASONS**
ULTRASCHALL-BEARBEITUNGSINSTRUMENT
ULTRASONIC SHAPING INSTRUMENT

(30) Priorité: 25.05.2001 EP 01810514
(43) Date de publication de la demande: 10.03.2004
(73) Titulaire: Ecole d'Ingénieurs, 2610 St-Imier (CH)
(72) Inventeur: HUGUENIN, Gérard, CH-2613 Villeret (CH); PASCHE, Pierre, CH-2610 St-Imier (CH)
(74) Mandataire: GLN
(86) Numéro de dépôt international: PCT/CH2002/000266
(87) Numéro de publication internationale: WO 2002/094120

(56) Documents cités:
- US-A- 4 371 816
- US-A- 5 059 122
- US-A- 5 294 896
- US-B1- 6 190 167

## Description

La présente invention se rapporte aux instruments de façonnage par ultrasons, du type comportant:
- une armature,
- une sonotrode montée élastiquement sur l'armature,
- un outil fixé à la sonotrode pour effectuer les opérations de façonnage, et
- un organe de commande pour commander et alimenter la sonotrode.

On entend par façonnage toute opération mécanique tendant à modifier la structure d'un objet par enlèvement mécanique de matière ou par fusion.

Un instrument de ce type est, par exemple, décrit dans le document WO 89/01763. Cet instrument est destiné au détartrage des dents, au moyen d'un burin animé d'un mouvement de faible amplitude à une fréquence ultrasonore, brisant le tartre et permettant ainsi d'en libérer la dent. L'organe de commande est un circuit de type amplificateur qui, couplé à la sonotrode, forme un oscillateur dont la fréquence est donnée par les caractéristiques de l'instrument. Cette fréquence varie notamment avec la température, laquelle peut augmenter, par effet Joule, lorsque l'instrument est en fonction.

L'utilisation d'un circuit de type amplificateur permet des conditions de travail satisfaisantes. Il est toutefois relativement coûteux, d'autant plus que les puissances mises en jeu sont importantes, compte tenu du volume disponible.

La présente invention a pour but de permettre l'utilisation d'un organe de commande simplifié, agencé pour appliquer aux bornes du transducteur un signal qui ne varie pas en fonction des caractéristiques de l'instrument. Il n'est, de la sorte, plus nécessaire d'avoir un asservissement, ce qui conduit à une simplification et à un volume réduit.

Ce but est atteint grâce au fait que l'instrument est dimensionné de manière à ce :
- que l'ensemble formé de la sonotrode et de l'outil présente une fréquence ultrasonore *fo* de résonance, dans un mode choisi parmi la traction-compression et la torsion, susceptible de varier entre une limite inférieure *fomin* et une limite supérieure *fomax*, et
- qu'il ne présente pas, lui-même, d'autre fréquence de résonance dans une plage comprise entre une fréquence *fpmin* < *fomin* et une fréquence *fpmax* > *fomax*,
l'organe de commande étant du type engendrant un signal sinusoïdal modulé en fréquence par un signal quasi aléatoire, de manière à appliquer un signal électrique de bande passante comprise entre une fréquence minimum *femin* et une fréquence maximum *femax, femin* étant compris dans l'intervalle *fpmin - fomin* et *femax* dans l'intervalle *fomax - fpmax.*

On entend par signal quasi aléatoire un signal aléatoire ou pseudo aléatoire, tel que ceux susceptibles d'être engendrés par des programmes informatiques au moyen d'un registre glissant, par exemple. La fréquence propre *fo* est à considérer comme un spectre de fréquences, dont le maximum se trouve à la valeur *fo*. La largeur du spectre est essentiellement fonction de la structure de la sonotrode et des conditions de travail. L'absence d'une fréquence de résonance autre que *fo* dans la plage considérée est à prendre dans un sens relatif. Dans la pratique, un rapport de quatre à un entre le niveau d'énergie à la fréquence *fo* considérée et celui dans le reste de la plage *fpmin - fpmax* est déjà suffisant pour obtenir des conditions de travail acceptables.

Avec un instrument tel que défini ci-dessus, la sonotrode est alimentée par la composante du signal correspondant à sa fréquence propre instantanée. En effet, comme l'intervalle *fomin-fomax* est compris dans l'intervalle *femin - femax,* l'entretien peut être fait dans toute la plage de fonctionnement de l'instrument. De plus, comme il n'y a pas d'autre fréquence de résonance dans l'intervalle *fpmin - fpmax,* lequel contient l'intervalle *femin - femax,* il n'y a pas de risque que l'instrument se mette à osciller à une fréquence parasite, ce qui aurait pour effet de réduire le rendement et de provoquer un échauffement pouvant aller jusqu'à empêcher un travail en continu.

Dans cet instrument, l'organe de commande peut comprendre un circuit de puissance et un circuit de commande pilotant le circuit de puissance, ce dernier étant formé d'un amplificateur de type E, alors que la sonotrode comporte un transducteur piézo-électrique. Plus précisément, le circuit de puissance comporte un transistor de puissance et un transformateur, le primaire du transformateur étant relié au transistor et le secondaire au transducteur piézo-électrique.

Selon les applications, il est utile de faire varier la puissance disponible sur l'outil. Cela est facilement réalisable en disposant d'un organe de commande permettant de faire varier les valeurs de *femin* et/ou *femax*. Il apparaît en effet que, plus l'intervalle *femin - femax* augmente, plus la puissance disponible pour la fréquence *fo* considérée diminue. Plus précisément, la puissance disponible est inversement proportionnelle à la variation de la largeur de bande.

De manière avantageuse, la sonotrode travaille selon un mode de traction-compression, sa fréquence étant supérieure à 20 kHz.

Pour permettre la manipulation de l'instrument, son armature est formée d'un manchon à l'intérieur duquel est montée la sonotrode.

Afin d'assurer des conditions optimales de fonctionnement de la sonotrode, celle-ci comporte une masse d'inertie et une tête. Elle est montée sur le manchon par deux organes élastiques coopérant l'un avec la masse, l'autre avec la tête, alors que l'outil est monté rigidement sur la tête. Le transducteur piézo-électrique est emprisonné entre la tête et la masse.

Ces instruments permettent notamment un façonnage par grattage, ce qui est possible lorsque l'outil présente une forme de burin, notamment agencé pour éliminer le tartre sur les dents.

D'autres avantages et caractéristiques de l'invention ressortiront de la description qui va suivre, faite en regard du dessin annexé, dans lequel:
- la figure 1 représente les composants d'un instrument selon l'invention, et
- la figure 2 est un schéma de l'organe de commande de cet instrument.

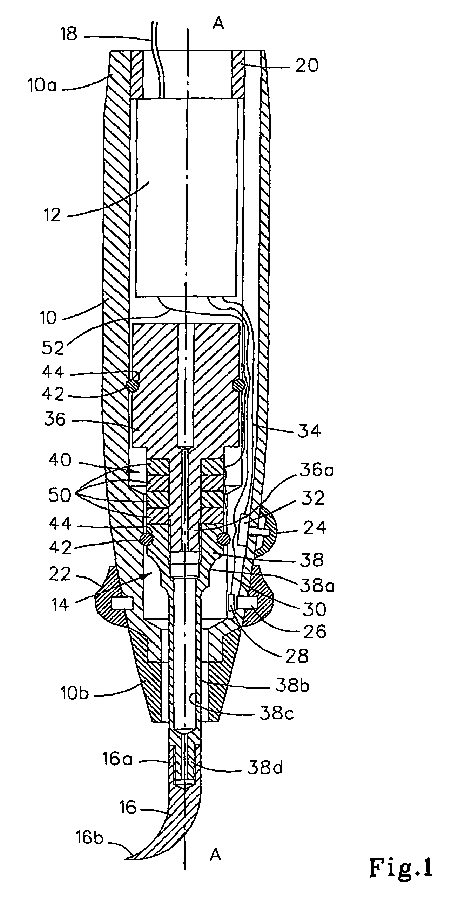

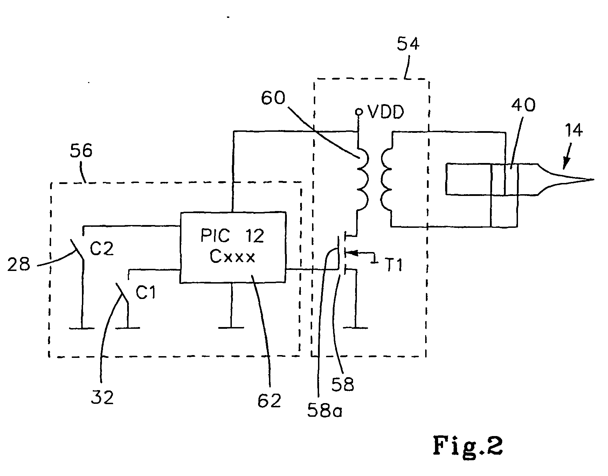

L'instrument représenté à la figure 1 est destiné à enlever le tartre sur des dents. Il comporte essentiellement une armature formée d'un manchon 10 et, logés à l'intérieur de celui-ci, un organe de commande 12 qui sera décrit de manière détaillée en référence à la figure 2 et une sonotrode 14, ainsi qu'un outil formé d'un burin 16, fixé rigidement sur la sonotrode 14, par vissage, et disposé à l'extérieur du manchon 10. L'organe de commande 12 est alimenté par une source d'énergie électrique non représentée, au moyen d'un câble 18 sortant du manchon 10 à l'une des ses extrémités.

Le manchon 10 est formé d'un tube sensiblement cylindrique, d'axe A-A, en acier inoxydable ou en matériau synthétique. L'une de ses extrémités 10a est partiellement fermée par un bouchon 20 annulaire maintenant l'organe 12 à l'intérieur du manchon 10 et traversé par le câble 18. L'autre extrémité 10b comporte une ouverture dans laquelle l'extrémité de la sonotrode 14 portant le burin 16 est engagée. Le manchon 10 peut être réalisé en une pièce ou faite de bagues coopérant les unes avec les autres et fixées entre elles par vissage ou soudage. L'utilisation de bagues facilite la mise en place de l'organe de commande 12 et de la sonotrode 14.

Le manchon 10 porte, dans sa portion voisine de son extrémité 10b, une bague de commande 22 destinée à régler la puissance disponible sur le burin 16 et un bouton 24 pouvant se mouvoir longitudinalement et commandant l'enclenchement et le déclenchement de l'instrument.

La bague de commande 22 est munie d'un aimant 26 annulaire et multipolaire, lequel commande un contacteur magnéto-sensible 28 fixé à l'intérieur du manchon 10 et relié électriquement à l'organe de commande 12 par un conducteur 30, la bague 22 et le contacteur 28 étant agencés de manière à ce que le sens de rotation de la bague 22 puisse être identifié par l'organe 12.

Le bouton 24 commande un interrupteur 32 également monté sur le manchon 10 et relié à l'organe 12 par un conducteur 34 pour commander le départ et l'arrêt de l'alimentation de la sonotrode 14, laquelle assure la mise en mouvement du burin 16.

La sonotrode 14 comprend une masse d'inertie 36, une tête 38 et un transducteur piézo-électrique 40 interposé entre la tête 38 et la masse 36. Elle est montée élastiquement à l'intérieur du manchon 10 au moyen de deux tores 42, en matériau élastique, engagés dans des gorges 44 pratiquées l'une dans la tête 38, l'autre dans la masse 36, et en appui contre le manchon 10.

La masse d'inertie 36 est choisie aussi lourde que possible, dans les limites acceptables pour permettre une bonne tenue en main, de manière à ce que le mouvement engendré par le transducteur piézo-électrique se répercute essentiellement sur le burin 16, le reste de l'instrument restant sensiblement immobile. Elle se prolonge en direction de la tête 38 par une tige 36a sur laquelle le transducteur 40 est engagé, et dont l'extrémité est munie d'un taraudage 36b.

La tête 38 présente une forme générale de canule, comportant une bague 38a vissée sur la tige 36a et en appui contre le transducteur 40, dans laquelle est pratiquée la gorge 44. La bague 38a se prolonge par un tube 38b, percé de bout en bout par un canal 38c, dont l'extrémité opposée à la bague est munie d'un filetage 38d sur lequel le burin 16 est fixé.

Le trou 38c a pour fonction d'ajuster les fréquences de résonance de la tête. Le diamètre du trou 38c et l'épaisseur des parois du tube 38b sont choisies de manière empirique, en fonction de la forme générale des différentes parties actives de l'instrument. En effet, une modification du diamètre du trou change de manière différente les fréquences de résonance des modes de traction compression, de torsion ou de flexion. Il est donc ainsi possible de décaler ces fréquences de résonance, en jouant sur le diamètre du trou 38c et sur l'épaisseur du tube 38b.

La tête 38 est avantageusement réalisée en un métal léger, par exemple en titane, de manière à ce que son inertie soit aussi faible que possible, tout en ayant un minimum de frottements internes.

La forme de la tête 38 est choisie de manière à ce que le mouvement du burin 16 soit le plus ample possible. Les considérations à ce propos sont évoquées dans le document WO 89/01763 cité plus haut. Elles ne seront donc pas expliquées plus en détail ici.

Le transducteur 40 est formé de quatre rondelles 50 en matériau piézo-électrique telles que celles vendues, par exemple, par la maison Philips (Eindhoven NL) sous la référence 4322 020 0659. Ces rondelles 50 ont un diamètre extérieur de 10 mm, une ouverture centrale de diamètre égal à 5 mm et une épaisseur de 2 mm. Elles sont revêtues, sur leurs deux faces planes, d'une couche en matériau conducteur, assurant la fonction d'électrode. Les rondelles 50 sont branchées en parallèle et reliées à l'organe 12 d'une part par la masse électrique, d'autre part par un conducteur 52, comme décrit par exemple dans le document WO 89/01763. Habituellement, le transducteur piézo-électrique travaille dans un mode de traction-compression. II est, toutefois, aussi possible d'envisager un mode de torsion. Un mode de cisaillement ne semble pas avoir d'application particulière.

La tête 38 est vissée sur la masse 36 de manière à pré-contraindre les rondelles piézo-électriques 50 afin que, même lorsqu'elles sont comprimées sous l'effet piézo-électrique, elles n'aient pas de jeu entre elles et avec la masse 36 et la tête 38.

Le burin 16 comprend une portion 16a, assurant sa fixation sur l'extrémité 38d de la tête 38 laquelle est munie, à cet effet, d'un trou taraudé, et une partie active 16b assurant la fonction de façonnage. Le matériau qui le constitue est choisi suffisamment dur pour attaquer le tartre déposé sur la dent à traiter, mais pas trop, de manière à éviter d'abîmer l'émail.

Les caractéristiques de l'ensemble des composants de la sonotrode ainsi que le burin 16 qu'elle porte, définissent sa fréquence propre *fo*. Cette fréquence est en général supérieure à 20 kHz, typiquement de 25 kHz. Elle peut varier entre une valeur *fomin* et *fomax,* notamment en fonction de la température de travail et de la charge appliquée sur le burin. Cette variation est de l'ordre de ± 1%.

Des essais ont été effectués avec une sonotrode présentant les caractéristiques suivantes. La masse d'inertie 36 en titane, a une longueur totale égale à 30 mm, la tige 36a ayant une longueur de 12,5 mm et un diamètre de 4,2 mm. Elle est percée axialement sur une longueur de 16 mm avec un diamètre de 2 mm dans sa partie présentant le plus grand diamètre, alors que dans la partie 36a, le diamètre est de 1 mm. La tête 38 est également en titane. La bague 38a comporte une portion cylindrique de diamètre égal à 10 mm et de longueur égale à 3 mm. Le tube 38b a un diamètre de 4 mm, une longueur sensiblement égale à 20 mm et une épaisseur de paroi égale à 0.4 mm. L'extrémité 38d a une longueur de 6 mm, dont 4,5 mm sont filetés. Elle est percée d'un trou de 1 mm de diamètre. Le dispositif obtenu a montré une fréquence de résonance en traction-compression à 24,3 kHz, et des fréquences parasites en flexion à 21,2 et 35,2 kHz, les amplitudes étant respectivement 1/3 et 1/9 de l'amplitude à la fréquence *fo*.

Les fréquences obtenues avec l'exemple décrit sont spécifiées dans le tableau ci-dessous:

| Paramètre | *fo* | *fomin* | *fomax* | *femin* | *femax* | *fpmin* | *fpmax* |
|---|---|---|---|---|---|---|---|
| Fréquence [kHz] | 24,3 | 24,05 | 24,55 | 21,2 - 24,05 | 24,55 - 35,2 | 21,2 | 35,2 |

II apparaît ainsi clairement que les plages dans lesquelles *femin* et *femax* peuvent varier sont larges, ce qui autorise une grande plage de réglage de la puissance fournie au burin 16.

L'organe de commande 12 est représenté sur la figure 2. Il comprend un circuit de puissance 54, assurant l'alimentation de la sonotrode 14, et un circuit de commande 56 pilotant le circuit de puissance 54.

Le circuit de puissance 54 est un amplificateur de classe E. Il comprend un transistor de puissance 58 du type BUZ 11 tel que commercialisé par la maison Infineon Technologies (München DE), et un transformateur 60 dont le primaire est relié à la source d'alimentation VDD et au transistor 58, alors que le secondaire est branché aux bornes du transducteur 40. Le transformateur 60 est dimensionné de manière à ce que la tension aux bornes du transducteur 40 soit suffisante pour dispenser une puissance telle que le nécessitent des opérations de détartrage. La pratique a montré qu'une tension efficace de l'ordre de 400V était suffisante.

Le circuit de commande 56 comprend le contacteur 28 et l'interrupteur 32, ainsi qu'un microprocesseur 62, par exemple de type PIC 12 Cxxx, tel que vendu par la maison Microchip Chandler, Arizona (USA).

Le microprocesseur 62 est muni d'une mémoire contenant des informations relatives à l'état du contacteur 28 et de l'interrupteur 32, ainsi que son programme de fonctionnement.

Le microprocesseur 62 a pour mission de contrôler l'état de l'interrupteur 32. Tant que celui-ci est ouvert, les autres programmes sont en veilleuse.

Lorsque l'interrupteur 32 est fermé, le microprocesseur 62 va chercher en mémoire l'information provenant du contacteur 28, celle-ci pouvant être modifiée en tournant la bague 22 dans un sens ou l'autre, ce qui incrémente ou décrémente le contenu de la mémoire. A partir de cette information, le microprocesseur 62 génère un signal porteur dont la fréquence femoy est voisine de la fréquence de résonance *fo* de la sonotrode 14 et un pseudo-bruit généré par l'utilisation d'un registre à décalage, comme exposé dans McMOS Handbook, section E, MOTOROLA 1974. La largeur de bande du pseudo-bruit, définie par une fréquence minimum *femin* et une fréquence maximum *femax,* est d'autant plus grande que le contenu de la mémoire est élevé.

Le signal, modulé par le pseudo-bruit est appliqué à la grille 58a du transistor 58, sous forme d'impulsions, amplifiées en courant par le transistor 58 et en tension par le transformateur 60. La sonotrode 14 est alimentée par la partie du signal coïncidant avec son spectre de résonance. De la sorte, l'énergie fournie est d'autant plus grande que la bande définie par *femin* et *femax* est étroite. En variant *femin* et/ou *femax*, il est donc possible de régler la puissance fournie au burin 16 par la sonotrode 14.

Avec une telle commande, le signal issu du microprocesseur peut rester le même, malgré des changements de la fréquence propre *fo* de la sonotrode, dans la mesure où *fomin* et *fomax* restent compris dans l'intervalle *femin - femax*.

Il est, de la sorte, possible d'assurer l'entretien d'un instrument tel que décrit avec un organe de commande de très grande simplicité. Il est toutefois nécessaire de prendre une précaution particulière. En effet, si l'instrument présentait une ou plusieurs fréquences propres dans l'intervalle *femin-femax*, il serait également mis en vibration, l'énergie étant alors dissipée en pure perte, provoquant, de plus, un échauffement de l'instrument. Ce problème peut être éviter en ajustant les composants de l'instrument de manière à ce qu'il ne présente pas d'autre fréquence de résonance dans une plage comprise entre *fpmin* < *femin* et *fpmax* > *femax*

Pour satisfaire à cette exigence, il est souhaitable de disposer d'un instrument aussi rigide que possible dans sa structure et d'ajuster les dimensions de ses différents composants de manière à atteindre ce but.

Dans la pratique, les différents composants sont dimensionnés de telle sorte que cette rigidité soit obtenue, puis la sonotrode est alimentée au moyen d'un signal à fréquence variable, de manière à mettre en évidence les fréquences de résonance. Ses dimensions sont ajustées pour obtenir une fréquence adaptée aux caractéristiques de l'instrument, tout en éliminant les fréquences parasites. Ce dimensionnement s'effectue par tâtonnement, en modifiant l'inertie de la sonotrode, essentiellement au niveau de la masse 36 et de la tête 38, ou sa structure élastique, essentiellement formée par la tige.

La pratique montre que les pièces constitutives de l'instrument sont suffisamment précises pour que ses fréquences propres ne changent pas de manière sensible de l'un à l'autre de ces instruments. Un contrôle en fin de fabrication est toutefois souhaitable, spécialement lorsqu'une fréquence de résonance parasite se trouve au voisinage de l'une ou l'autre des fréquences *fpmin* et *fpmax*.

Il est évident que l'instrument tel que décrit peut faire l'objet de nombreuses variantes, sans pour autant sortir du cadre de l'invention. Il est ainsi possible d'utiliser un tel instrument pour des travaux d'ébavurage, de découpage ou de gravage, ou encore pour effectuer des micro-soudures par ultrasons. Dans chacune de ces applications, l'outil est adapté à l'opération de façonnage à effectuer, tout en prenant en compte l'influence qu'il provoque sur d'éventuelles fréquences parasites de l'instrument.

## Revendications

1. Instrument de façonnage par ultrasons comportant:
• une armature,
• une sonotrode (14) montée élastiquement sur l'armature,
• un outil (16) fixé à la sonotrode (14) pour effectuer les opérations de façonnage, et
• un organe de commande (12) pour commander et alimenter la sonotrode (14),
**caractérisé en ce qu'**il est dimensionné de manière à ce que:
• l'ensemble formé de la sonotrode (14) et de l'outil (16) présente une fréquence ultrasonore *fo* de résonance, dans un mode choisi parmi la traction-compression et la torsion, susceptible de varier entre une limite inférieure *fomin* et une limite supérieure *fomax*, et
• ledit ensemble ne présente pas d'autre fréquence de résonance dans une plage comprise entre une fréquence *fpmin* < *fomin* et une fréquence *fpmax* > *fomax*,
et **en ce que** l'organe de commande (12) est du type engendrant un signal sinusoïdal modulé en fréquence par un signal quasi aléatoire, de manière à appliquer un signal électrique de bande passante comprise entre une fréquence minimum *femin* et une fréquence maximum *femax, femin* étant compris dans l'intervalle *fpmin - fomin* et *femax* dans l'intervalle *fomax - fpmax*.

2. Instrument selon la revendication 1, **caractérisé en ce que** ledit organe de commande (12) comprend un circuit de puissance (54) et un circuit de commande (56) pilotant le circuit de puissance (54), ledit circuit de puissance étant formé d'un amplificateur de type E, et **en ce que** ladite sonotrode (14) comporte un transducteur piézo-électrique (40).

3. Instrument selon la revendication 2, **caractérisé en ce que** ledit circuit de puissance (54) comporte un transistor de puissance (58) et un transformateur (60) dont le primaire est relié audit transistor et le secondaire audit transducteur (40).

4. Instrument selon l'une des revendications 2 et 3, **caractérisé en ce que** ledit circuit de commande (12) comporte des moyens (22) pour faire varier la bande passante *femin - femax,* et ainsi modifier l'énergie fournie à l'outil (16).

5. Instrument selon l'une des revendications 2 à 4, **caractérisé en ce que** ledit mode est de traction-compression et que sa fréquence *fo* est supérieure à 20 kHz.

6. Instrument selon l'une des revendications 2 à 5, **caractérisé en ce que** ladite armature est formée d'un manchon (10) à l'intérieur duquel est montée ladite sonotrode (14).

7. Instrument selon la revendication 6, **caractérisé en ce que** ladite sonotrode (14) comporte une masse d'inertie (36) et une tête (38), **en ce qu'**elle est montée sur ledit manchon (10) par deux organes élastiques (42) coopérant l'un avec la masse (36), l'autre avec la tête (38), et **en ce que** ledit outil (16) est monté rigidement sur ladite tête (38).

8. Instrument selon la revendication 7, **caractérisé en ce que** ledit transducteur (14) est emprisonné entre ladite masse (36) et ladite tête (38).

9. Instrument selon l'une des revendications 1 à 8, **caractérisé en ce que** ledit outil présente une forme de burin (16).

10. Instrument selon la revendication 9 **caractérisé en ce que** ledit burin (16) est agencé pour éliminer le tartre sur les dents.

## Claims

1. Ultrasonic shaping instrument including:
• a mount structure,
• a sonotrode (14) elastically mounted on the mount structure,
• a tool (16) fixed to the sonotrode (14) for carrying out shaping operations, and
• a control unit (12) for controlling and powering the sonotrode (14),
**characterized in that** it is dimensioned such that:
• the assembly formed by the sonotrode (14) and the tool (16) has an ultrasonic resonant frequency *fo*, in a mode selected from among traction-compression and torsion, capable of varying between a lower limit *fomin* and an upper limit *fomax*, and
• said assembly does not itself have any other resonant frequency within a range comprised between a frequency *fpmin* < *fomin* and a frequency *fpmax* > *fomax*,
and **in that** the control unit (12) is of the type generating a sinusoidal signal frequency modulated by a quasi-random signal, so as to apply a passband electric signal comprised between a minimum frequency *femin* and a maximum frequency *femax, femin* being comprised in the interval *fpmin - fomin* and *femax* in the interval *fomax - fpmax*.

2. Instrument according to claim 1, **characterized in that** said control unit (12) includes a power circuit (54) and a control circuit (56) driving the power circuit (54), said power circuit being formed of an E type amplifier, and **in that** said sonotrode (14) includes a piezoelectric transducer (40).

3. Instrument according to claim 2, **characterized in that** said power circuit (54) includes a power transistor (58) and a transformer (60) whose primary winding is connected to said transistor and whose secondary winding is connected to said transducer (40).

4. Instrument according to any of claims 2 and 3, **characterized in that** said control circuit (12) includes means (22) for varying the passband *femin - femax,* and thus modifying the energy provided to the tool (16).

5. Instrument according to any of claims 2 to 4, **characterized in that** said mode is a traction-compression mode and its frequency *fo* is higher than 20 kHz.

6. Instrument according to any of claims 2 to 5, **characterized in that** said mount structure is formed of a sleeve (10), inside which said sonotrode (14) is mounted.

7. Instrument according to claim 6, **characterized in that** said sonotrode (14) includes an inertia mass (36) and a head (38), **in that** it is mounted on said sleeve (10) by two elastic members (42), one cooperating with the mass (36), the other with the head (38), and **in that** said tool (16) is rigidly mounted on said head (38).

8. Instrument according to claim 7, **characterized in that** said transducer (14) is interposed between said mass (36) and said head (38).

9. Instrument according to any of claims 1 to 8, **characterized in that** said tool has the shape of scraper (16).

10. Instrument according to claim 9, **characterized in that** said scraper (16) is arranged for removing tartar from teeth.

## Patentansprüche

1. Ultraschall-Formgebungsinstrument, das folgende Elemente umfasst:
- eine Armatur,
- eine elastisch auf der Armatur montierte Sonotrode (14),
- ein an der Sonotrode (14) befestigtes Werkzeug (16) zur Ausführung von Formgebungsarbeiten, und
- ein Steuerungsorgan (12) zur Steuerung und Speisung der Sonotrode (14),
**dadurch gekennzeichnet, dass** es so bemessen ist, dass:
- die durch die Sonotrode (14) und das Werkzeug (16) gebildete Baugruppe, in einem unter Zug-Druck und Torsion ausgewählten Modus eine Ultraschall-Resonanzfrequenz *fo* aufweist, die zwischen einer Untergrenze *fomin* und einer Obergrenze *fomax* variieren kann, und
- die besagte Baugruppe innerhalb eines zwischen einer Frequenz *fpmin* < *fomin* und einer Frequenz *fpmax* > *fomax* liegenden Bereichs keine andere Resonanzfrequenz aufweist,
und **dadurch**, **dass** das Steuerorgan (12) vom Typ ist, der ein Sinussignal erzeugt, das durch ein quasi Zufallssignal so frequenzmoduliert wird, dass ein elektrisches Signal mit einer zwischen einer Minimalfrequenz *femin* und einer Maximalfrequenz *femax* liegenden Bandbreite angelegt wird, wobei *femin* innerhalb des Intervalls *fpmin - fomin,* und *femax* innerhalb des Intervalls *fomax - fpmax* liegt.

2. Instrument nach Anspruch 1, **dadurch gekennzeichnet, dass** das besagte Steuerorgan (12) einen durch einen E-Typ-Verstärker gebildeten Leistungskreis (54) und einen diesen steuernden Steuerkreis (56), bzw. die besagte Sonotrode (14) einen piezoelektrischen Signalumformer (40) umfasst.

3. Instrument nach Anspruch 2, **dadurch gekennzeichnet, dass** der besagte Leistungsschaltkreis (54) einen Leistungstransistor (58) und einen Transformator (60) umfasst, dessen Primärkreis mit dem besagten Transistor, bzw. dessen Sekundärkreis mit dem besagten Signalumformer (40) verbunden ist.

4. Instrument nach einem der Ansprüche 2 und 3, **dadurch gekennzeichnet, dass** der besagte Steuerkreis (12) Mittel (22) umfasst, um die Bandbreite *femin - femax* zu variieren und **dadurch** die dem Werkzeug (16) zugeführte Energie zu verändern.

5. Instrument nach einem der Ansprüche 2 bis 4, **dadurch gekennzeichnet, dass** der besagte Modus der auf Zug-Druck ist, und dass dessen Frequenz *fo* höher als 20 kHz ist.

6. Instrument nach einem der Ansprüche 2 bis 5, **dadurch gekennzeichnet, dass** die besagte Armatur durch eine Hülse (10) gebildet wird, in der die besagte Sonotrode (14) montiert ist.

7. Instrument nach Anspruch 6, **dadurch gekennzeichnet, dass** die besagte Sonotrode (14) eine Trägheitsmasse (36) und einen Kopf (38) umfasst, dass sie auf der besagten Hülse (10) über zwei elastische Organe (42) montiert ist, wovon eines mit der Masse (36) und das andere mit dem Kopf (38) zusammenwirkt, und dass das besagte Werkzeug (16) starr auf dem besagten Kopf (38) montiert ist.

8. Instrument nach Anspruch 7, **dadurch gekennzeichnet, dass** der besagte Signalumformer (14) zwischen der besagten Masse (36) und dem Kopf (38) eingeschlossen ist.

9. Instrument nach einem der Ansprüche 1 bis 8, **dadurch gekennzeichnet, dass** das besagte Werkzeug die Form eines Meißels (16) aufweist.

10. Instrument nach Anspruch 9, **dadurch gekennzeichnet, dass** der besagte Meißel (16) für das Entfernen von Zahnstein ausgelegt ist.
